# EUROPEAN PATENT APPLICATION

(11) **EP 1 111 874 A1**
(43) Date of publication of application: **27.06.2001**
(21) Application number: 99850210.8
(22) Date of filing: 20.12.1999
(51) Int. Cl.: H04L 29/06

(54) **Routing in mobile-IP Ad-Hoc networks**

(71) Applicant: TELEFONAKTIEBOLAGET L M ERICSSON, 126 25 Stockholm (SE)
(72) Inventor: Alriksson, Fredrik, 121 44 Johanneshov (SE); Jönsson, Ulf, 127 36 Skärholmen (US); Purser, Kevin, 704 61 Slidell, Louisiana (US)
(74) Representative: Bjelkstam, Peter

(57) **Abstract**

The invention is mainly related to the problem of forming adhoc wireless networks and to how routing in these mobile ad hoc networks can interwork with ordinary Internet routing. More particularly the invention relates to how to enable Mobile IP in these ad hoc networks. The invention uses Mobile IP foreign agents as gateways between the ad hoc network and the Internet. The nodes in the network use their home addresses for all communication and register with a foreign agent in the network. To send packets to hosts on the Internet either tunneling or proxying is used. To receive packets from the Internet the packets are routed to the foreign agent using Mobile IP; the foreign agent then routes the packets to the destination on the ad hoc network. Since ordinary Mobile IP requires link-layer connectivity between foreign agent and visiting node not guaranteed on the ad hoc network, certain changes are also made to Mobile IP's mechanisms.

## Description

### FIELD OF THE INVENTION

The invention is mainly related to the problem of forming adhoc wireless networks and to how routing in these mobile ad hoc networks can interwork with ordinary Internet routing. More particularly the invention relates to how to enable Mobile IP in these ad hoc networks.

### RELATED ART

In areas with little or no communication infrastructure, or where it is too expensive, wireless mobile users may still be able to communicate through the formation of an *ad hoc* network. Generally in such a network each mobile node operates not only as a host but also as a router, forwarding packets to other mobile nodes in the ad hoc network that may not be within direct wireless transmission range of each other. Each node participates in an ad hoc routing protocol that allows it to discover "multi-hop" paths through the network to any other node. Mobile nodes in these networks establish routing among themselves to form their own network "on the fly".

Possible uses for these Mobile Ad Hoc Networks ("MANET") include e.g. business associates sharing information during a meeting, soldiers relaying information on the battlefield, and emergency relief personnel who must quickly set up a network to coordinate efforts after a hurricane or earthquake. A particular application which will likely introduce ad hoc networking to the mass market is Bluetooth, a low-power short range radio technology initially intended as a means to replace cables.

These mobile ad hoc networks have been studied for some time, but most work has been concentrated on stand-alone ad hoc networks. Several proposed routing protocols use reactive routing, also known as on-demand routing as opposed to ordinary Internet Protocol ("IP") routing, which uses proactive routing. Proactive routing means that the routing protocol constantly tries to keep track of the routes in the network so that when a host needs to send a datagram a route to the recipient is known before hand. Reactive routing means that the routing protocol only operates when there are datagrams to deliver in the network, otherwise it does nothing.

There are two basic problems with these mobile ad hoc networks:
How can we connect an ad hoc network that uses on-demand routing to the Internet?
How can we enable Mobile IP services in such an ad hoc network?

Addressing on the Internet is hierarchical with IP addresses divided into a network ID and a host ID. All hosts on a certain network use the same network ID. In this way, each IP address is mapped to a physical location that can be derived by looking at the network ID of the IP address. This also means that an Internet host doesn't have to keep track of routes to every other Internet host. Instead, routing information can be aggregated; one entry in the routing table can handle all hosts that share the same network ID. To make better use of the address space, yet another level of hierarchy is used; a network can be divided into subnetworks. The host ID is then divided into a subnet ID and a host ID.

The number of networks in the Internet is quite substantial and it isn't always necessary to keep track of them all, since they only have limited interconnections. Because most networks are leaf networks, default routes are widely used.

In short, IP routing works as follows:
1. Look for an entry in the routing table that matches the complete destination IP address. If found, use that route.
2. Look for an entry in the routing table that matches just the network ID of the destination IP address. If found, use that route.
3. Look for a default entry in the routing table. If found use that route, otherwise consider the destination unreachable.

The ability to use one route to a network instead of having one route per host and using a default route are two powerful features of IP routing.

If we want an ad hoc network to be routable from the Internet as any other Internet network, we must assign to it a network ID and also ensure that the nodes in the ad hoc network use it. In such a scenario, the IP multihop communication within the ad hoc network is what distinguishes it from regular Internet networks. Nodes in the ad hoc network cannot expect to have link-layer connectivity with all other nodes in the ad hoc network as in regular Internet networks. In order to reach the default gateway between the ad hoc network and the fixed Internet, nodes must use IP layer routing.

The traditional view of ad hoc networks is as autonomous systems of mobile nodes using IP. As such, the ad hoc network should be able to operate without any centralized configuration. Also, from an ad hoc point of view, any set of nodes should be able to form an ad hoc network regardless of which addresses they use and without having to use any particular network ID. This implies that one can no longer decide if a node belongs to that particular network simply by looking at the network ID.

The scenario that is focused on in the present invention is what happens when such an autonomous ad hoc network is connected to the Internet and the nodes within the ad hoc network wish to communicate with other Internet hosts.

Most work concerning routing in ad hoc networks have concentrated on stand-alone ad hoc networks. The IP mobility that is provided in earlier ad hoc networks was limited to the ad hoc network as such. To allow roaming between different networks the Mobile IP protocol was developed (separately from ad hoc networking) . In a stand-alone ad hoc network, without the hierarchy that the network ID creates, there is no meaning in having a default route since either the recipient is reachable within the ad hoc network or it isn't reachable at all. As a result of this, routing in ad hoc networks are typically performed using host routes only.

This is the case for both Ad Hoc On-demand Distance Vector Routing ("AODV") and Dynamic Source Routing ("DSR") for example, which use neither network nor default routes. In AODV there are no periodic routing table exchanges. Routes are only set up when two nodes want to communicate with each other, and only nodes that lie on the path between the two end nodes keep information about the route. The AODV algorithm: (a) broadcasts discovery packets as sparingly as possible; (b) distinguishes between local connectivity management and general topology maintenance; and (c) propagates information about changes in local connectivity to neighboring nodes likely to need that information. One key aspect of AODV is that each node maintains a routing table containing one entry for each destination that the node is either communicating with itself or forwarding data to on behalf of some other node.

Another type of known on-demand routing is DSR. The feature that makes DSR stand out from other MANET routing protocols is that DSR uses *strict source routing* means. Strict source routing means that the source determines the complete sequence of hops that each packet should traverse. The list of hops is then included in each packet's header. One obvious disadvantage of this is the source routing overhead every packet has to carry. Loose source routing is when a packet must be routed via some specific nodes, e.g. a foreign agent in this case, but otherwise can choose its own way to the destination.

DSR uses two basic mechanisms, route discovery and route maintenance. Route maintenance is also used in order to handle link breakages and is carried out whenever a route is used to send packets. Route discovery is used to find a route from the source to the destination. The network is flooded with *route request messages.* Each node in the network adds their address in the route request and then forwards it further. If a route exists to the destination then the route request will find its way to the destination. All the destination has to do is unicast a *route reply* back to the source using the route listed in the route request. Each node in the network maintains a route cache where it caches the routes it has learned; route discovery is only used when an appropriate route cannot be found in the route cache.

On-demand routing protocols like DSR and AODV usually search their routing tables in the following manner:
1. Look for an entry in the routing table that matches the complete destination IP address. If found, use that route.
2. Try to find a host route within the ad hoc network by using the route discovery mechanisms. If found, use that route, otherwise consider the destination unreachable.

Host routing by ad hoc nodes as described above should be feasible for destinations on the fixed Internet when we connect an ad hoc network to the fixed Internet since routing information is only kept for destinations with which an ad hoc node is currently communicating. What is lacking in these approaches is a mechanism for propagating routing information from the fixed Internet to the ad hoc network, i.e. how nodes in the ad hoc network should treat network and default routes.

To be reachable from the rest of the Internet, an ad hoc node needs an IP address that allows the ad hoc node to be routable from the rest of the Internet. Since the ad hoc network is connected to the Internet there must be at least one node that resides on the border between the ad hoc network and the rest of the Internet. This node will be referred to as the Internet gateway. The Internet gateway must have at least one IP address that can be used for communication with the rest of the Internet. How can the nodes in the ad hoc network make use of that fact?

Mobile IP is a proposed standard protocol for location independent routing. It allows a mobile node to have seamless, untethered access to the Internet while roaming and builds on the Internet Protocol by making mobility transparent to applications and higher level protocols like TCP and UDP. The main technical obstacle that had to be overcome to support mobility was the way the IP addresses are used. Unicast Internet traffic is routed to the location specified by the destination address in the IP header. The address specifies a network address and hence traffic is sent to this network.

Unfortunately this does not work for mobile nodes since a mobile node wants to have the same address independent of its location without the sender having to keep track of where the mobile node is located. Mobile IP solved this problem by allowing the mobile node to use two IP addresses, one for identification by e.g. TCP, and one for routing to the node's current location.

In order to maintain existing transport layer connections every mobile node is assigned a static *home address.* This home address enables the mobile node to always be able to receive data as if it was on its home network. When the mobile node is attached to another network than its home network, called a *foreign network,* it uses a *care-of address.* The care-of address is an IP address valid in the foreign network that the mobile node is visiting. Whenever a mobile node moves from one network to another it has to change to a new care-of address that is valid on the new network.

To be able to receive datagrams while visiting a foreign network the mobile node has to register its current care-of address with its home agent. To do this, the mobile node usually has to register through a *foreign agent* ("FA") located in the foreign network. The process of detecting a foreign agent is quite similar to that used by Internet nodes to detect routers which support Internet Control Message Protocol ("ICMP"). Each mobility agent periodically broadcasts agent advertisements onto its directly attached subnetworks to advertise its existence. The mobile node listens for these advertisements in order to select a mobility agent (i.e. a foreign agent) through which the node can register with its home agent.

When the node is successfully registered with the home agent, every datagram sent to the mobile node's home address is received by the home agent and forwarded to the care-of address, e.g. the foreign agent, that then forwards it to the mobile node. The forwarding is performed using a method called tunneling. When the home agent receives a datagram destined for the mobile node, it encapsulates the original datagram within a new IP packet that contains the mobile node's care-of address as its destination address. This new IP packet is then routed to the care-of address where it is then decapsulated. The decapsulated packet is now said to have been *tunneled.* If the care-of address is a foreign agent care-of address the foreign agent forwards the decapsulated datagram to the mobile node.

The technique of ordinary Mobile IP with foreign agent care-of addresses assumes link-layer connectivity between the foreign agent and the visiting node. In summary, the communication between foreign agents and visiting nodes is as follows:
1. Foreign agents broadcasts agent advertisements periodically (once per second). These advertisements are used by visiting nodes to
   detect the presence of a foreign agent,
   discover the presence of new foreign agents,
   decide when it has moved, and
   detect when a foreign agent is no longer reachable.
2. Visiting nodes may broadcast agent solicitations to detect foreign agents. A foreign agent that receives an agent solicitation must respond with a unicast agent advertisement.
3. When a visiting node has received a valid agent advertisement from a foreign agent it may register with that foreign agent.

IP broadcasts are used frequently for the operation of ordinary Mobile IP. In ad hoc networks, such broadcasts are much more costly, since they have to traverse multiple hops and must be retransmitted by every node within the ad hoc network. Thus, it would be desirable to reduce the number of broadcasts if possible.

Some approaches exist already which attempt to apply Mobile IP to ad hoc networks. In "Ad Hoc Networking with Mobile IP", *Proceedings of 2*^{*nd*} *European Personal Mobile Communication Conference,* September 1997, a solution for using Mobile IP on top of a proactive routing protocol is described. The routing protocol that is used is said to be "a modified RIP", and is very similar to Destination Sequenced Distance Vector Routing ("DSDV"). The solution seems fairly straightforward to use for a proactive routing protocol like DSDV, but it isn't viable for a reactive, on-demand, routing protocol since it relies on the periodic control packets of the routing protocol for spreading Agent Advertisements. In an on-demand routing protocol, there is no such thing as periodic control packets.

One point made in the "Ad Hoc Networking" article is that both Mobile IP and the ad hoc routing protocol use the routing table. To coordinate the two, a *route manager* is introduced. Instead of modifying the routing table directly, both Mobile IP and the ad hoc routing protocol send their route manipulation requests to the route manager. It is then up to the route manager to decide which manipulations that should be carried out.

When it comes to combining Mobile IP with ad hoc networks using on-demand routing protocols, no detailed solution has been presented. In "Supporting Hierarchy and Heterogeneous Interfaces in Multi-Hop Wireless Ad Hoc Networks", *Proceedings of the Workshop on Mobile Computing, IEEE,* June 1999, an initial design of an addressing architecture is presented which, among other things, could be used to provide Mobile IP support within an ad hoc network. The section that covers interworking between Mobile IP and ad hoc networking is, however, not very elaborate. Additionally, it assumes DSR is used as the routing protocol in the ad hoc network.

However the scenario "Supporting Hierarchy" only considers one foreign agent and one mobile node only. The idea is that the mobile node piggybacks a Mobile IP Agent Solicitation on a Route Request targeting the IP limited broadcast address (255.255.255.255). The limited broadcast is used to allow the Solicitation to propagate over multiple hops through the ad hoc network, but not be forwarded to the Internet by gateways. When the foreign agent receives the Solicitation, it will unicast an Agent Advertisement in reply. Once the Agent Advertisement reaches the mobile node, the mobile node can register with the foreign agent and the ordinary triangle routing of Mobile IP can begin.

Most of the problems solved by the present invention aren't addressed in the "Ad Hoc Networking" and" Supporting Hierarchy" articles, e.g.
- What happens if there are several FAs to choose from?
- How can the mobile node detect that it has moved?
- How are handoffs handled?

One basic problem for using Mobile IP in a MANET is that link-layer connectivity between the foreign agent and the mobile node cannot be assumed. The first solution presented above in "Ad Hoc Networking" doesn't use on-demand routing and is thus not applicable.

The shortcomings of the second solution presented above in "Supporting Hierarchy" are:
1. It assumes DSR.
2. There is no movement detection or handoff support.
3. It uses a special addressing scheme with interface index.

Accordingly, there exists a need for a mobile ad hoc network which can communicate with the Internet using Mobile IP foreign agents as gateways which uses on-demand routing but doesn't require a specific ad hoc routing protocol on the ad hoc network, nor link-layer connectivity between foreign agent and visiting node, and allows for movement detection and handoff support.

### SUMMARY OF THE INVENTION

The invention is mainly related to the problem of forming ad-hoc wireless networks and to how routing in these mobile ad hoc networks can interwork with ordinary Internet routing. More particularly the invention relates to how to enable Mobile IP in these ad hoc networks.

As can be seen above, there still exists disadvantages with the current methods of allowing communication between mobile ad hoc networks and the Internet. More specifically, there are no current solutions that allow a mobile ad hoc network to communicate with the Internet using Mobile IP foreign agents as gateways which uses on-demand routing but doesn't require a specific ad hoc routing protocol on the ad hoc network, nor link-layer connectivity between foreign agent and visiting node, and allows for movement detection and handoff support.

Accordingly, it is an object of the present invention to provide a mobile ad hoc network which can solve these problems.

The Mobile IP Mobile Ad Hoc Network ("MIPMANET") solution according to the present invention achieves these, and other objectives. The basic idea behind MIPMANET is the following:
1. Use Mobile IP foreign agents as Internet gateways.
2. Nodes in the ad hoc network that want Internet access use their home address for all communication and register with a foreign agent.
3. To send packets to hosts on the Internet: incorporate default routes and network routes into MANET routing by using either tunneling or proxying:
   a) Tunnel packets to the foreign agent with whom you are registered. If it cannot be decided if the destination is located within the ad hoc network by looking at the IP address: search for the node within the ad hoc network before tunneling the packet.
   b) Let the Internet gateway use proxy route replies to respond to route requests.
4. To receive packets from hosts on the Internet: The packets are routed to the foreign agent by ordinary Mobile IP. The foreign agent can then deliver the packets to the node in the ad hoc network.

The present invention also presents some adjustments to Mobile IP's mechanisms that can be used within ad hoc networks. Since link-layer connectivity between foreign agent and visiting node cannot be expected within an ad hoc network certain modifications must be made to the communication between the foreign agent and the visiting node.
1. Agent advertisements can be broadcast in response to agent solicitations, instead of unicast as specified in RFC2002. This allows the nodes in the ad hoc network to cooperate to minimize the number of solicitations that are broadcast.
2. Instead of broadcasting agent advertisements periodically, they can be unicast periodically to registered nodes only.
3. Nodes in the ad hoc network can cache agent advertisements and reply to agent solicitations with cached advertisements.

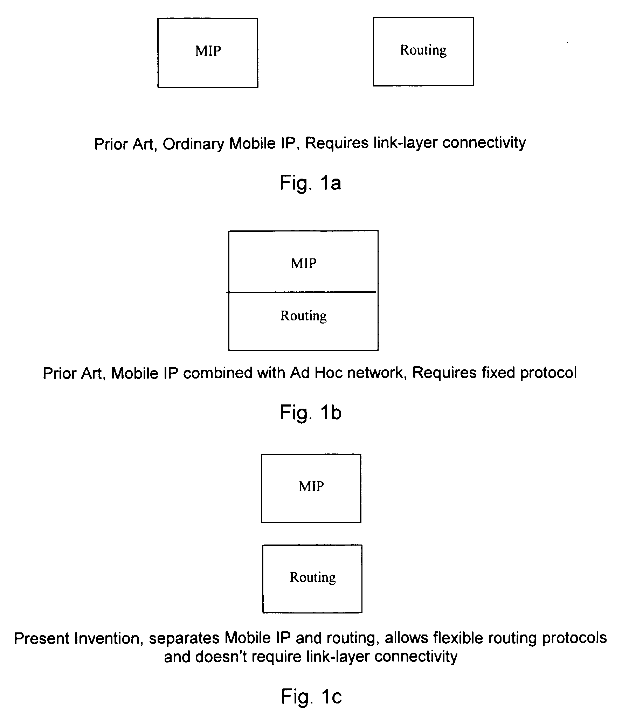

One key difference between the present invention and the prior art, in addition to the other differences discussed above, is that ordinary Mobile IP keeps the Mobile protocol separate from the routing protocol, as shown in Figure la. However, as we've seen, ordinary Mobile IP isn't really applicable to ad hoc networks because it depends on link-layer connectivity. On the other hand, prior solutions which applied Mobile IP to ad hoc networks have combined Mobile IP with the routing protocol, as shown in Figure 1b. This limits the flexibility of the system, in addition to limiting it to only one routing protocol. The present invention, as shown in Figure 1c, splits the functionality of Mobile IP and the routing protocol, as done in ordinary Mobile IP, but allows it to work in combination with ad hoc networks.

Some merits of the invention include the following:

The invention will enable interworking between mobile ad hoc networks and the Internet, without putting any requirements on ad hoc nodes that do not want to communicate with the Internet, they may use arbitrary addresses. The only requirement regarding addresses is that nodes that want to communicate with the Internet shall use an address that is routable from the Internet.

The invention will also enable Mobile IP services in mobile ad hoc networks, including handoffs between multiple foreign agents. In addition, the use of multiple gateways with proxying will reduce the possibility of bottlenecks for data flow outward from the ad hoc network. Moreover, the use of a check for an external destination before sending a proxy reply will give an accurate representation of the total round trip transmission time for such a destination.

Although the invention has been summarized above, the method according to the present invention is defined according to appended claim 1. Various embodiments are further defined in the dependent claims.

### BRIEF DESCRIPTION OF THE DRAWINGS

The present invention will now be described in more detail with reference to preferred embodiments of the present invention, given only by way of example, and illustrated in the accompanying drawings, in which:

FIG. 1 is a diagram showing the relationship between Mobile IP and Routing protocols in the prior art and the present invention.

FIG. 2 is a flowchart illustrating the procedure in nodes receiving route replies.

FIG. 3 is a diagram of a MIPMANET where a node attempts to contact another node in the network.

FIG. 4 is a diagram of a MIPMANET where a node can communicate with another node in the network using either a direct connection or an Internet connection using a proxy route.

FIG. 5 is a diagram of a MIPMANET with a foreign agent on the border between the ad hoc network and the Internet.

FIG. 6 is an illustration of a MIPMANET Interworking Unit.

### DETAILED DESCRIPTION

The present invention can be divided into many small parts. The basic goal is to provide a mobile ad hoc network. The invention uses Mobile IP foreign agents as Internet gateways between the ad hoc network and the Internet. The mobile nodes in the ad hoc network that want Internet access use their home address for all communication and register with a foreign agent that lies on the border between the ad hoc network and the Internet, having link-layer connectivity with the Internet and with the mobile nodes in the ad hoc network.

Innovative aspects of the present invention include tunneling and/or proxying for sending packets to hosts on the Internet. Default routes and network routes are incorporated into MANET routing by using either tunneling or proxying:
a) Tunnel packets to the foreign agent with whom you are registered. If it cannot be decided if the destination is located within the ad hoc network by looking at the IP address: search for the node within the ad hoc network before tunneling the packet.
b) Let the Internet gateway use proxy route replies to respond to route requests.

To receive packets from hosts on the Internet the packets are routed to the foreign agent by ordinary Mobile IP. The foreign agent can then deliver the packets to the node in the ad hoc network.

In addition, since link-layer connectivity cannot be expected in the ad hoc network, certain changes are made to Mobile IP's mechanisms according to the present invention. These include the following:
1. Agent advertisements can be broadcast in response to agent solicitations, instead of unicast as specified in RFC2002. This allows the nodes in the ad hoc network to cooperate to minimize the number of solicitations that are broadcast.
2. Instead of broadcasting agent advertisements periodically, they can be unicast periodically to registered nodes only.
3. Nodes in the ad hoc network can cache agent advertisements and reply to agent solicitations with cached advertisements.

The methods of tunneling and proxying, and the changes to Mobile IP needed for ad hoc networks are described in more detail below.

In order to reach the Internet from a MANET using host routing, as known in the art, it should still be possible where on-demand routing is used in ad hoc networks with a network ID assigned to it, since the ad hoc nodes could probably store default routes and network routes in their routing table and use almost the same kind of lookup mechanism that ordinary IP routing does. However, it is much more flexible where ad hoc networks operate without network IDs. In that case you cannot decide whether a destination is located within the ad hoc network or not, by simply looking at the destinations network ID as above. It then becomes necessary to look for the node in the ad hoc network before we decide if it is located within the ad hoc network or not.

One way of distributing routing information from the fixed Internet into the ad hoc network is to let the Internet gateways make use of *proxy route replies.* This will require additional semantics in the routing protocol but will enable multiple gateways equally supporting data flow from an ad hoc network to the Internet to be utilized. This mechanism involving added semantics and proxy replies is hereafter referred to as *proxying,* which would allow any gateway to participate in the route discovery process.

Proxy route replies were introduced in the DSR protocol. There it is no different from a normal route reply, but since DSR records the entire route during the discovery process a node originating a route request can see that the node which originated the route reply is a gateway by its gateway interface index. For routing protocols like AODV that keep information about routes on a distributed hop-by-hop basis it is necessary to let the intermediate nodes in the discovery process know about alternate routes, otherwise they would be unusable.

Although the semantics according to the present invention have been developed for a particular routing protocol the concept can be applied to others. The added semantics within the node acting as a gateway when receiving a route request are as follows:
1. Forward the request (in case the destination lies behind the gateway);
2. Send a check to the external destination (e.g. an ICMP ECHO_REOUEST) ;
3. After receiving a positive indication (e.g. an ICMP ECHO_RESPONSE) from the destination, send a *proxy route reply;* and
4. Add a route table entry for the external destination with a sequence number at least equal to the sequence number in the route request.

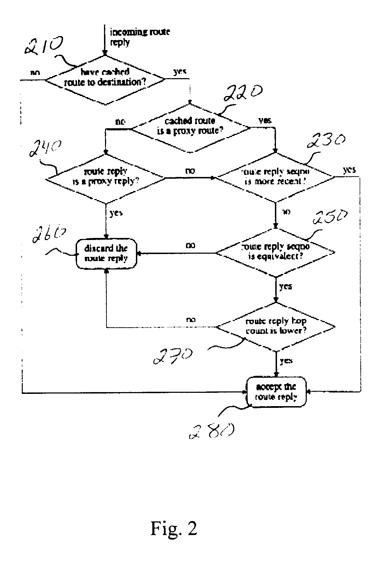

When a mobile node initiates a route discovery, with the existence of multiple gateways, the possibility exists for a node (and other intermediate nodes) to receive a normal route reply and potentially many proxy route replies, one from each gateway servicing the ad hoc network. This introduces the need for additional conditions for accepting (and forwarding if necessary) a reply, denoted in Figure 2. When a node initiates a route discover it will receive a route reply. It will first check 210 to see if it has a cached route to the particular destination it is seeking to establish contact with. If the answer is yes then it will check 220 to see if this cached route is a proxy route. If the incoming route reply is not a cached route then it will accept the route reply 280.

If the cached route is a proxy route then it checks 230 if the route reply sequence number is more recent than the cached route. If it is then it will accept the route reply 280. In the case the cached route is not a proxy route then it will check 240 to see if the route reply is a proxy reply. If it is then it will discard 260 the proxy reply. If it is not then it will also check 230 if the route reply sequence number is more recent. In the case it is not then it will check 250 if the route reply sequence number is equivalent to the cached route. If it is not then it will discard the route reply 260. If it is then it will check 270 if the route reply hop count is lower. If it is not then it will discard the route reply 260. If it is then it will accept the route reply 280.

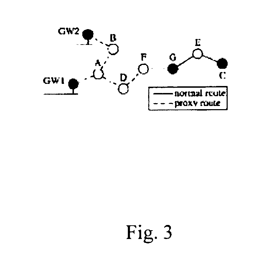

Nodes that receive a proxy route reply will cache that route as being the only route to a particular destination if no normal route replies reach the node. Consider Figure 3, where node G initiates the route discovery process for node C, which creates three routes in the ad hoc network, two which involve a gateway and a third which routes directly to the destination. Since the destination actually lies within the ad hoc network, the proxy routes should not be used, thus intermediate nodes A, B, D and F have cached an incorrect route to the destination.

Under these circumstances, nodes which replace a proxy route with either a better proxy route (node A replacing a proxy route through node B with a proxy route through GW1) or a normal route (node G replacing proxy routes from node F with a normal route through node E) send a form of route error message to the intermediate nodes using the incorrect proxy route. As this error message propagates back to the gateways which sent proxy replies, all intermediate nodes will remove their cached proxy route entries. Additionally, the gateways will also become aware of the destination's existence within the ad hoc network, and will no longer respond to further requests for that destination with a proxy reply.

By using tunneling we can incorporate the default route-concept into on-demand ad hoc routing protocols like AODV and DSR without changing them that much. Presuppose that a node knows about an Internet gateway. What we propose is that the node should search its routing table in the following manner:
1. Look for an entry in the routing table that matches the complete destination IP address. If found, use that route.
2. Invoke the routing protocol to try to find a host route within the ad hoc network by using the route discovery mechanisms. If found, use that route.
3. Otherwise, tunnel the packet to the Internet gateway.

To be able to tunnel a packet to the Internet gateway, the node must have a route to it. If the node does not know of any Internet gateway, it considers the destination unreachable instead of tunneling the packet. The information that there is an Internet gateway available in the ad hoc network can be distributed to the ad hoc nodes in many ways. If Mobile IP is used, its agent advertisements can be used. Other ways could be to incorporate a router discovery mechanism into the routing protocol or by using ICMP router advertisements. The tunneling could be accomplished by using either encapsulation or source routing (strict or loose). In the present invention the preferred embodiment uses Mobile IP with foreign agents, but this tunneling mechanism could be used in systems without Mobile IP foreign agents or Mobile IP at all.

When the Internet gateway receives a tunneled packet from a node in the ad hoc network, it can make use of all routing information that its ordinary proactive routing protocol has assembled including default and network routes. Nodes in the ad hoc network that only want to communicate with other nodes in the ad hoc network and do not want Internet access don't have to be aware of the Internet, tunneling, etc. They will only see routes between nodes in the ad hoc network since packets that are destined for hosts outside of the ad hoc network are tunneled to the Internet gateway. No routing information about routes outside the ad hoc network is distributed within the ad hoc network.

The tunneling mechanism presented above can, in fact, be used in conjunction with the proxying method presented earlier, as it alleviates the need for intermediate nodes to keep any information about the proxy route thus rendering the route error mentioned above unnecessary.

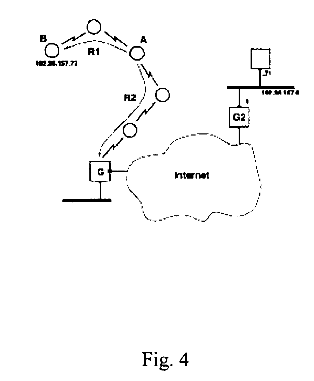

Consider the scenario in Figure 4. Node A wants to communicate with node B. Both A and B are located within the same ad hoc network. If A sends a route request in order to find a route to B it would receive a route reply from B, announcing route R1. However, the Internet gateway G also has a route to B, since it has a network route via gateway G2 to a network that uses the same network ID as B. Thus G sends a proxy route reply back to A announcing route R2. The problem with this situation is if the nodes along R2 store information about the proxy route and decide to start communicating with B using the proxy route. Either we can solve the problem by using the proxying mechanism described above or we can avoid the problem by using the tunneling mechanism. In the latter case all we have to do is to say that the intermediate nodes should not set up the proxy route but should instead set up the route to G, i.e. a route with G as destination instead of B as destination.

We now turn our attention to the situation where a node on the Internet is trying to reach a mobile node in a MANET. In order for an ad hoc node with an arbitrary IP address to be reachable from the rest of the Internet, an IP address is needed that allows the ad hoc node to be routable from the rest of the Internet. Since the ad hoc network is connected to the Internet there has to be at least *one* node that resides on the border between the ad hoc network and the rest of the Internet, i.e. the Internet gateway. The Internet gateway must have at least one IP address that can be used for communication with the rest of the Internet. The present invention uses Mobile IP with foreign agent care-of addresses as the gateway.

A Mobile IP foreign agent can serve several visiting nodes using a single care-of address. A visiting node with an arbitrary home address can attach to any network on the Internet as long as there is a foreign agent that is willing to serve that network. When registered with a foreign agent, a visiting node is routable by its home address. If we can treat nodes in an ad hoc network that want access to the Internet as visiting nodes and let them register with a foreign agent, we are all set.

One issue with this solution is that according to Mobile IP, visiting nodes must have link-layer connectivity with their foreign agent. Since link-layer connectivity between foreign agent and visitng node cannot always be expected in an ad hoc network, some modifications must be made to the communication between the foreign agent and the visiting node. These changes will be described in more detail below.

One benefit of using Mobile IP foreign agents is that registered visiting nodes know about a gateway to the Internet, the foreign agent they are registered with. This allows us to use the tunneling mechanism described above in the following manner. When a visiting node registers with a foreign agent, it informs the routing protocol that it now can tunnel packets out of the ad hoc network. If the registered visiting node cannot find a host by using the route discovery mechanism, it should create a host route for the destination in question and put it in the routing table. This host route should direct packets to a *virtual interface* where they are encapsulated with the foreign agent as the destination IP address, and sent back to IP to be routed to the foreign agent. A virtual interface is a software driver that appears to be a network interface to upper layers but does not have any hardware associated with it. For traffic in the other direction, i.e. from the foreign agent to the mobile node, ordinary MANET routing can be performed. Since the route between the foreign agent and the mobile node is contained within the ad hoc network, tunneling does not have to be used. By using this solution only registered visiting nodes get Internet access; the only traffic that will enter the ad hoc network from the Internet is traffic that is tunneled to the foreign agent from a registered node's home agent. The only traffic that will leave the ad hoc network is traffic that is tunneled to the foreign agent from a registered node.

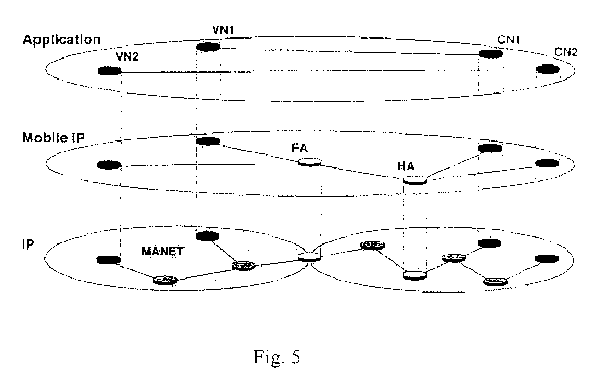

In this method, the mobility provided by Mobile IP and the mobility provided by the ad hoc routing are separated very nicely. In Figure 5 we can see an ad hoc network with a foreign agent on the border. There are three registered visiting nodes and two nodes that do not use Mobile IP at all. In the lower layer the routes between all nodes in the network in this particular scenario are shown. As we can see, the visiting nodes are 1, 3, and 4 hops away from the foreign agent. From Mobile IP's point of view the interesting connectivity is between the visiting node and the foreign agent; how the routes are formed is of no importance.

One of the key features of ad hoc networking is that it allows *multihop* communication. Mobile IP, on the other hand, was designed to have the foreign agent and the visiting node on the same link. When they have link-layer connectivity, packets to the mobile node are forwarded by the foreign agent using its link layer address. In an ad hoc network, the foreign agent and a visiting node might not have link-layer connectivity, but instead have to use multihop communications. As now applied to an ad hoc network Mobile IP would have to rely on the routing protocol used in the ad hoc network for transportation of packets between the foreign agent and a mobile node.

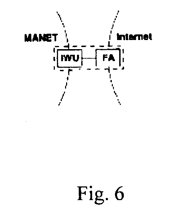

In Figure 6 can be seen what happens when using ordinary Mobile IP in an ad hoc network. It shows that a foreign agent cannot use the link-layer address stored in its visitor list to deliver packets to a visiting node. The visiting node ("VN") changes link-layer connectivity from node A to nod B. If ordinary Mobile IP were to be used, FA would have associated VN's home address with A's link-layer address. It would therefore have tried to deliver packets to VN using A's link-layer address. If, instead, FA relies on the routing protocol to find a route to VN, packets destined for VN reach VN even though it has switched to have connectivity with FA through B instead of A.

If the route to VN is multihop, an IP address has to be used. In the present invention this IP address will be the home address of VN. If the home address is to be used care has to be taken to avoid routing loops since there are two nodes connected to the Internet that want to receive packets sent to a single IP address, the home agent and the mobile node. Instead of reaching VN, packets forwarded by the foreign agent could perhaps be routed out on the Internet again and back to the home agent.

As a result of these concerns, modifications to different parts of Mobile IP that will adapt Mobile IP to mobile ad hoc networks, and enhance its performance in many other situations, will be described in the following sections.

The proposed solution is that foreign agents should broadcast agent advertisements in response to agent solicitations. In this way, the visiting nodes can cooperate to minimize the number of solicitations as one solicitation is enough for everyone. If we have one foreign agent and two visiting nodes about to solicit, the proposed solution would generate 2 broadcasts (1 solicitation and 1 advertisement) whereas the unicast approach of ordinary Mobile IP would generate 2 broadcasts and 2 unicasts (2 solicitations and two advertisements). The gain in less broadcasts increases with the number of foreign agents and visiting nodes.

To prevent several visiting nodes from broadcasting agent solicitations, we let them wait for a certain amount of time before they are allowed to solicit. This time, t, depends on their distance, *n_hop,* from the foreign agent they were last registered with, so nodes that were closer to the foreign agent will solicit before other nodes. The expression for the wait-time is:$\text{t = t_hop*(n_hop - 1 + random (0, 0. 5))}$ *t_hop* is the time it takes for a packet to traverse one hop. A node that hears a solicitation from any other node backs off and awaits an agent advertisement.

In ordinary Mobile IP, foreign agents broadcast agent advertisements periodically with a beacon period of about one second. When applied to an ad hoc network, this means that the whole network is flooded periodically by the foreign agents. This is a costly operation. As an alternative, instead of broadcasting agent advertisements periodically, one could unicast them to registered nodes only. If only a small fraction of the nodes in the ad hoc network are visiting nodes, this will ensure less traffic in the ad hoc network. If the visiting nodes are in majority, it is probably better to use one broadcast instead of multiple unicasts. MIPMANET can use either solution.

We can also let foreign agents select between unicast and broadcast in an adaptive manner in order to keep the overhead as low as possible at all times. One solution to this is to let the foreign agent unicast agent advertisements periodically to visiting nodes if there are only a few visiting nodes registered to it. As the number of registered mobile nodes increases the number of registered nodes will come to a threshold when the foreign agent decides to start sending broadcast agent advertisements instead. Once a foreign agent eventually starts sending broadcast agent advertisements, it won't revert to sending unicasts until the registrations have expired from sufficiently many nodes that the foreign agent considers it better to begin sending unicast instead.

Another variant of the adaptive solution is to let the foreign agent select between unicast and broadcast depending on the ratio between visiting nodes and the total amount of nodes in the ad hoc network. If the ratio is high then broadcast should be used, otherwise unicast should be used. The hard part of this solution is to find out the total number of nodes in the ad hoc network. One possible solution is to make a qualified guess by estimating the diameter of the network from the number of hops to the visiting nodes.

Another alternative to limit the flooding of the network with advertisements is to set the TTL-field in the IP-header to just a few hops. In this way only mobile nodes that are closer than a certain number of hops to a foreign agent will receive agent advertisements from it and thus also be able to register with it. Nodes that are more hops than the TTL value used in the agent advertisements will not be able to hear from the foreign agent. The drawback of this method is that nodes that are not close enough may not find any foreign agents to register through. However, it is very simple to implement and can easily be combined with other techniques such as the aggregation scheme described next.

Imagine the situation where there are several foreign agents in an ad hoc network and each broadcasts agent advertisements periodically. Instead of having each node in the network forward each broadcast advertisement, we could let nodes that receive multiple advertisements check the advertisements and make a decision on which advertisement is best and only forward that advertisement. One metric that could be used is the number of hops that the advertisements have traveled. It could be possible to do this by letting only the intermediate nodes forward agent advertisements that have traversed fewer hops than every other agent advertisement that was received earlier within a beacon period.

Since a visiting node may be located several hops away from a foreign agent, it cannot determine if a foreign agent is reachable by using link-layer feedback only. It needs to rely on the routing protocol to determine that there is in fact no route to the foreign agent. It is also more difficult to decide between several foreign agents as the quality of the communication with each foreign agent may depend on the quality of many links.

In the present invention a way of deciding which foreign agent is better is presented, named the MIPMANET Cell Switching Algorithm, and it works as follows:
If the visiting node is not registered, it selects the foreign agent which has the best metric.
If the visiting node is registered, it switches to another foreign agent only if the metric of the latter is a specific amount better than the metric of the former, for a specific number of consecutive agent advertisements.

One example of this MIPMANET Cell Switching Algorithm is to use the hop count to a foreign agent as the metric. The algorithm will then be as follows:
If the visiting node is not registered, it selects the foreign agent that is the least number of hops away.
If the visiting node is registered, it switches to another foreign agent only if the latter is a certain number of hops x closer than the former, for y consecutive agent advertisements.

Carefully selecting x and y can tune the behavior of this decision mechanism to fit many situations.

Another possibility is to let nodes in the ad hoc network cache agent advertisements and use these to respond to agent solicitations instead of forwarding the solicitations. In this way, agent solicitations would not have to traverse all the way to the foreign agent as some intermediate node may have a cached advertisement it can respond with. This will decrease the response time for the soliciting node and generate less traffic in the network. When the lifetime of an agent advertisement ends, it should of course be discarded.

IP multicast could also be used for Mobile IP related communication like agent advertisements and agent solicitations. Multicast in ad hoc networks is supported by e.g. AODV.

It would be possible to dedicate one multicast group to agent solicitations and agent advertisements, and let all visiting nodes and foreign agents listen to that group. In this way solicitations and advertisements would only involve those mobile nodes and foreign agents using MIPMANET, without disturbing other nodes more than necessary.

To be able to use the original Mobile IP code in the foreign agents, we have put all new functionality in an interworking unit (IWU) that is inserted between Mobile IP and the ad hoc network as depicted in Figure 6. The IWU enables the use of multihop routing of Mobile IP messages in the ad hoc network. It can be put in either the foreign agent itself, i.e. in the same node, or in a separate host on the same link as the foreign agent. In the latter case the foreign agent does not need any ad hoc routing functionality at all. From a foreign agent point of view, the IWU will look like a visiting node that is registering different IP addresses from the same link-layer address.

Every packet that is sent from the foreign agent to the IWU is transformed and sent out to the ad hoc network depending on which approach is being used. The different approaches described earlier are handled in the following way by the IWU, depending on whether we are discussing agent solicitation or agent advertisements.

In the case of agent solicitation, if agent solicitations are to be replied to with broadcast agent advertisements, the IWU changes all incoming unicast agent advertisements to broadcast and forwards them to the ad hoc network. Otherwise, if the agent solicitations are to be replied to with unicast agent advertisements, the IWU must only forward the unmodified advertisements to the ad hoc network.

In the case of periodic agent advertisements, if the periodic agent advertisements are unicast to registered nodes only, the IWU ensures that all incoming broadcast agent advertisements are copied and unicast to every registered visiting node. For this to work, the IWU needs to have knowledge about which nodes are registered to the foreign agent. If the agent advertisements are broadcast periodically, the IWU simply forwards the agent advertisements to the ad hoc network.

The embodiments described above serve merely as illustration and not as limitation. It will be apparent to one of ordinary skill in the art that departures may be made from the embodiments described above without departing form the spirit and scope of the invention. The invention should not be regarded as being limited to the examples described, but should be regarded instead as being equal in scope to the following claims.

## Claims

1. A mobile ad hoc network having a first mobile node with a home address, the first node using its home address for communicating with the Internet, a second node acting as a gateway for communicating information packets between the first node in the ad hoc network and the Internet, characterized by
in order to send information to the Internet, incorporating default routes and network routes into the network using either tunneling or proxying.

2. The ad hoc network of Claim 1 further characterized wherein
the gateway is a Mobile IP foreign agent,; and
in order to receive information from hosts on the Internet, routing the information to the foreign agent by ordinary Mobile IP.

3. The mobile ad hoc network of Claim 1 or 2 further characterized wherein
communication using the gateway is initiated by sending a route request;
in the case of a destination in the ad hoc network, forwarding the request;
in the case of a destination external to the ad hoc network, sending a check to the destination;
after receiving a positive indication from the destination, sending a proxy route reply; and
in the case of a destination external to the ad hoc network, adding a route table entry for the external destination with a sequence number at least equal to the sequence number in the route request.

4. The ad hoc network of Claim 3 further characterized wherein
the check to an external destination is an ICMP ECHO_REQUEST.

5. The ad hoc network of Claim 3 further characterized wherein
the positive indication is an ICMP ECHO_RESPONSE.

6. The ad hoc network of Claims 3-5 further characterized wherein
in the case a node intitiates route discover to another node in the network, the network having at least one route to the destination involving a gateway and at least one direct route to the destination;
nodes intermediate between node initiating discover and the destination node will replace a incorrect proxy route with either a better proxy route, if one is available, or with a direct route, and will send a route error message to intermediate nodes using the incorrect proxy route.

7. The ad hoc network of Claims 3-6 further characterized wherein
in the case where the route request is sent by a mobile node intitiating route discovery and there are a plurality of gateways, each gateway receiving a route reply performing the following steps:
checking if the gateway has a cached route to the destination;
if there is no cached route then accept the route reply;
if there is a cached route, check if the cached route is a proxy route;
if the cached route is a proxy route, check if the route reply sequence number is more recent, else check if the route reply is a proxy reply;
if the route reply is a proxy reply, discard the route reply, else check if the route reply sequence number is more recent;
if the route reply sequence number is more recent, accept the route reply, else check if the route reply sequence number is equivalent to the cached route sequence number;
if the route reply sequence number is equivalent to the cached route sequence number, check if the route reply hop count is lower than the cached route's, else discard the route reply;
if the route reply hop count is lower than the cached route's, accept the route reply.

8. The ad hoc network of Claim 1 or 2 further characterized wherein
each node has a routing table, the node intitiating communication by
first looking for an entry in its routing table that matches the complete address of the destination and using that address if found;
if no entry was found in the routing table, invoking the ad hoc network's routing protocol to find a host route within the ad hoc network by using route discovery mechanisms and using that route, if found;
if no route is found then tunnel the packet to the gateway, if a gateway can be found;
if no gateway can be found the consider the destination unreachable.

9. The ad hoc network of Claim 8 further characterized wherein
information that a gateway is available is sent to the at least one node using Mobile IP agent advertisements.

10. The ad hoc network of Claim 8 further characterized wherein
information that a gateway is available is sent to the at least one node using a router discovery mechanism.

11. The ad hoc network of Claim 8 further characterized wherein
information that a gateway is available is sent to the at least one node using ICMP router advertisements.

12. The ad hoc network of Claim 8-11, further characterized wherein
the tunneling is accomplished using encapsulation.

13. The ad hoc network of Claims 8-11, further characterized wherein
the tunneling is accomplished using source routing.

14. The ad hoc network of Claim 13 further characterized wherein
the source routing is strict.

15. The ad hoc network of Claim 13 further characterized wherein
the source routing is loose.

16. The ad hoc network of Claim 2 further characterized wherein
when a node registers as a visiting node with a foreign agent, it informs the network routing protocol that it can tunnel packets out of the ad hoc network;
if the registered visiting node cannot find a host using a route discovery mechanism then it should create a host route for the destination and put it on its routing table;
this host route should direct packets to a virtual interface where they will be encapsulated with the foreign agent as a destination address.

17. The ad hoc network of Claim 16 further characterized wherein
agents periodically broadcast an agent advertisement to all nodes in the network, and when nodes solicit foreign agents, the agents respond by broadcasting an agent advertisement to all the nodes in the network.

18. The ad hoc network of Claim 17 further characterized wherein
the nodes soliciting foreign agents cooperate so that a plurality of visiting nodes will send only one solicitation for the group.

19. The ad hoc network of Claim 18 further characterized wherein
a plurality of nodes are prevented from simultaneously soliciting foreign agents by forcing them to wait a time t before being allowed to solicit, where *t = t_hop*(n_hop - 1 + random(0 , 0. 5)),* t_hop being the time taken for a packet to traverse one hop and n_hop begin the distance, in hops, between a node and the foreign agent where it was previously registered.

20. The ad hoc network of Claim 16 further characterized wherein
nodes solicit foreign agents, the agents responding by unicasting an agent advertisement to nodes registered as visiting nodes

21. The ad hoc network of Claim 17 or 20 further characterized wherein
the foreign agent adaptively selects between unicasting and broadcasting advertisements based on the number of nodes registered as visitors to the network.

22. The ad hoc network of Claim 21 further characterized wherein
the foreign agent periodically unicasts agent advertisements while the number of visiting nodes is below a threshold;
when the number of visiting nodes goes above the threshold the foreign agent will begin broadcasting agent advertisements.

23. The ad hoc network of Claim 22 further characterized wherein
the foreign agent will revert to unicasting when a number of agent registrations expires, bringing the total number of agents registered below a second threshold.

24. The ad hoc network of Claim 23 further characterized wherein
the foreign agent periodically unicasts agent advertisements while the ratio of visiting nodes to total nodes in the network is below a threshold;
when the number of visiting nodes goes above the threshold the foreign agent will begin broadcasting agent advertisements.

25. The ad hoc network of Claim 24 further characterized wherein
the ratio is guessed by estimating the diameter of the network using the number of hops to the visiting nodes.

26. The ad hoc network of Claims 2-25, further characterized wherein
the network has a plurality of foreign agents;
to select the best agent a visiting node that is not registered selects the agent which has the best metric;
to select the best agent a visiting node that is registered switches to another agent only if the metric of the other agent is specific amount better than the metric of the agent for which the visiting node is registered and is better for a specific number of consecutive agent advertisements.

27. The ad hoc network of Claim 26 further characterized wherein
the metric is the hop count and the metric is better when the hop count is lower.

28. The ad hoc network of Claims 2-27 further characterized wherein
the network has a plurality of foreign agents periodically broadcasting agent advertisements and each node that receives an advertisement only forwards the best quality advertisement received.

29. The ad hoc network of Claim 28 further characterized wherein
the quality of agent advertisements is determined based on the number of hops that the advertisement has traveled.

30. The ad hoc network of the Claims 2-29 further characterized wherein
the network has a plurality of foreign agents periodically broadcasting agent advertisements and each node that receives an advertisement caches it; and
each node with a cached advertisement that receives an agent solicitation responds with the cached advertisement instead of forwarding the solicitation to the agent.

31. The ad hoc network of Claim 30 further characterized wherein
a cached advertisement has a lifetime for which it is valid, the cached advertisement being discarded after the lifetime has expired.

32. The ad hoc of the Claims 2-29 further characterized wherein
agent advertisements and agent solicitations are sent using IP multicast.

33. The ad hoc network of Claim 32 further characterized wherein
there are a plurality of multicast groups, one group being dedicated to agent solicitations and agent advertisements, with all visiting nodes and foreign agents listening to the one dedicated multicast group.

34. The ad hoc network of the above claims further characterized wherein
the network has an Interworking Unit ("IWU") located between Mobile IP and the network, to enable the use of multihop routing of Mobile IP messages in the network.

35. The ad hoc network of Claim 34 further characterized wherein
the IWU and foreign agent are located on the same link.

36. The ad hoc network of Claim 35 further characterized wherein
the IWU and foreign agent are located in the same node.

37. The ad hoc network of Claims 34-36 further characterized wherein
if agent solicitations are to be replied to with broadcast agent advertisements, the IWU changes all incoming agent advertisements to broadcast and forwards them to the ad hoc network, else if the agent solicitations are to be responded to with unicast agent advertisements, the IWU must only forward the unmodified advertisements to the ad hoc network.

38. The ad hoc network of Claims 34-36 further characterized wherein
if periodic agent advertisements are unicast to registered nodes only, the IWU ensures that all incoming broadcast agent advertisements are copied and unicast to every registered visiting node, else if periodic agent advertisements are broadcast, the IWU forwards the agent advertisements to the ad hoc network.

39. A computer program product directly loadable into the internal memory of a digital computer, comprising software code portions for performing the steps the Mobile IP or routing protocol of any of the above claims when said product is run on a computer.

40. A computer program product stored on a computer usable medium, comprising readable program means for causing a computer to control the execution of the Mobile IP or routing protocols in any of claims 1-38.
